# EUROPÄISCHE PATENTANMELDUNG

(11) **EP 2 030 664 A1**
(43) Veröffentlichungstag der Anmeldung: **04.03.2009**
(21) Anmeldenummer: 08014745.7
(22) Anmeldetag: 20.08.2008
(51) Int. Cl.: B01D 46/00, B01D 46/24

(54) **Filterelement mit wechselbarem Filterkopf**

(30) Priorität: 30.08.2007 DE 202007012178 U
(71) Anmelder: Rapp, Peter, 74629 Pfedelbach (DE)
(72) Erfinder: Rapp, Peter, 74629 Pfedelbach (DE)
(74) Vertreter: Müller, Hans

(57) **Zusammenfassung**

Ein lösbar in einem Filtergehäuse befestigbares Filterelement (12) besitzt einen Kopfflansch (18), der mittels Befestigungselementen (32, 34) an einer Filtergehäuseplatte (14) des Filtergehäuses lösbar lagefixierbar ist. Der Filterkopf (30) ist - direkt oder indirekt - an einem Kopfflansch (18) lösbar befestigbar, und das Filtermedium (17) des Filterelements (12, 12.2) ist gasdicht in dem Kopfflansch (18) befestigt.

## Beschreibung

### TECHNISCHES GEBIET

Die Erfindung betrifft ein Filterelement, dessen Filtermedium in seinen beiden Endbereichen gasdicht in einem Filterkopf und Filterboden befestigt ist. In ein Filtergehäuse können mehrere derartige Filterelemente austauschbar eingesetzt werden. Die mit Stäuben versehende Rohluft strömt durch die einzelnen Filterelemente hindurch, wobei sich die Stäube an der Außenseite eines jeden Filterelementes absetzen. Zum Reinigen der Filterelemente wird Druckluft in Gegenrichtung durch die Filterelemente stoßweise hindurch gedrückt, um die an dem Filterelement sich abgelagerten Staubpartikel von dem Filterelement wieder zu entfernen. Die Staubpartikel fallen nach dem Lösen nach unten von dem Filterelement ab. Solche Filterelemente können als im Querschnitt etwa rechteckförmige Filterplatten oder als im Querschnitt etwa kreisförmige Filterpatronen ausgebildet sein.

### STAND DER TECHNIK

Aus der EP 0 610 545 B1 ist ein als Filtereinsatz bezeichnetes Filterelement bekannt, das mit seinem stirnseitigen Ende in einem als Halteflansch bezeichneten Filterkopf gasdicht befestigt ist. Der Halteflansch wird seinerseits und damit auch der Filtereinsatz mittels eines Stützringes an der Gehäusewand lösbar befestigt. Die Befestigung erfolgt über eine lösbare Klemmverbindung, die den Halteflansch zwischen dem Stützring und der Gehäuseplatte einklemmt. Nach Verbrauch des Filtereinsatzes wird der Stützring von der Gehäuseplatte gelöst und der Filtereinsatz mit dem an ihm fest verbundenen Halteflansch aus der Gehäuseplatte entfernt und durch ein entsprechendes neues, unverbrauchtes Element (Filtereinsatz und Halteflansch) ersetzt.

Sofern der Filterkopf in Ausströmrichtung eine an die Gestalt einer Venturidüse angelehnte Form besitzt, um eine optimale Luftführung in das Filterelement hinein beim Abreinigen desselben zu ermöglichen, lässt sich ein solcher Stützring nicht mehr verwenden. Bei solchen, in Art einer Venturidüse ausgebildeten Filterköpfen werden zu ihrer Befestigung an einer Gehäuseplatte eines Filtergehäuses von außen auf den Filterkopf pressend anlegbare Spannelemente verwendet. Solche Filterelemente werden in großen Stückzahlen hergestellt und gewerblich eingesetzt. Von wirtschaftlicher Bedeutung ist dabei auch der im Zusammenhang mit dem Austauschen einzelner Filterelemente entstehende Aufwand.

### DARSTELLUNG DER ERFINDUNG

Ausgehend von diesem vorbekannten Stand der Technik liegt der Erfindung die Aufgabe zugrunde, wirtschaftlich günstige Filterelemente anzugeben, mit dessen Filtergehäuse auf wirtschaftlich insgesamt günstige Weise ausgestattet und betrieben werden können. Diese Erfindung ist durch die Merkmale des Anspruchs 1 gegeben. Sinnvolle Weiterbildungen der Erfindung sind Gegenstand von sich daran anschließenden weiteren Ansprüchen.

Die Erfindung zeichnet sich dadurch aus, dass der Filterkopf lösbar am Filterelement vorhanden ist und dass im Bereich des ursprünglichen Filterkopfes lediglich noch ein querschnittsmäßig verkleinerter Kopfflansch vorhanden ist, an dem das eigentliche Filtermedium des Filterelements gasdicht angeschlossen und insbesondere ein- oder angeschweißt ist. Diese Konstruktion hat den Vorteil, dass mit dem Entsorgen des Filterelementes nicht auch sein gesamter Filterkopf mit entsorgt werden muss. Der eigentliche Filterkopf mit seiner an die Gestalt einer Venturidüse angelehnten Form kann nämlich bei dem nächsten, neu eingesetzten Filterelement wieder verwendet werden. Zusammen mit dem Filtermedium des Filterelements wird lediglich ein vergleichsweise kleiner Kopfflansch, in dem das Filtermedium kopfseitig befestigt ist, mit entsorgt. Die austauschbaren Teile des Filterelementes sind dadurch kleiner, als sie es bei den im Stand der Technik bekannten vergleichbaren Filterelementen sind.

Ausbildungen für einen solchen gleichsam zweigeteilten Filterkopf sind in zwei Ausführungsbeispielen dargestellt und sind merkmalsmäßig in weiteren Ansprüchen angegeben. Wie die Ausführungsbeispiele zeigen, kann das Filterelement auf der Rohgasseite oder auch auf der Reingasseite der Filtergehäuseplatte, in der das Filterelement eingebaut ist, befestigt werden. Das Material des Filterkopfes muss nicht unbedingt dem des Kopfflansches entsprechen, da die beiden Teile nicht einteilig miteinander verbunden sind. Es hat sich als wirtschaftlich sinnvoll herausgestellt, den Filterkopf als Kunststoff-Spritzteil herzustellen.

Um eine gute Abdichtung zu erreichen, wird zwischen dem Kopfflansch und der Filtergehäuseplatte ein streifenförmiges Dichtelement eingelegt. Dieses Dichtelement kann, wie in der Zeichnung dargestellt, in einer entsprechenden Einformung des Kopfflansches einsitzen. Um, wie vorstehend bereits ausgeführt, das Filterelement auf der Rohgasseite oder auf der Reingasseite der Filtergehäuseplatte befestigen zu können, erweist es sich als vorteilhaft, in dem Kopfflansch beidseitig in axialer Richtung des Filterelementes jeweils eine solche Einformung für ein Dichtelement vorzusehen.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispielen näher beschrieben und erläutert. Es zeigen:
- Fig. 1: eine halbseitig geschnittene Seitenansicht des oberen Bereiches eines in einer Filtergehäuseplatte eines Gehäuses angeklemmt gehaltenen Filterelementes, wobei der Kopfflansch des Filterelementes auf der Reingasseite platziert ist und
- Fig. 2: eine Darstellung ähnlich der von Fig. 1, mit einem auf der Rohgasseite platzierten Kopfflansch eines Filterelementes.

### WEGE ZUM AUSFÜHREN DER ERFINDUNG

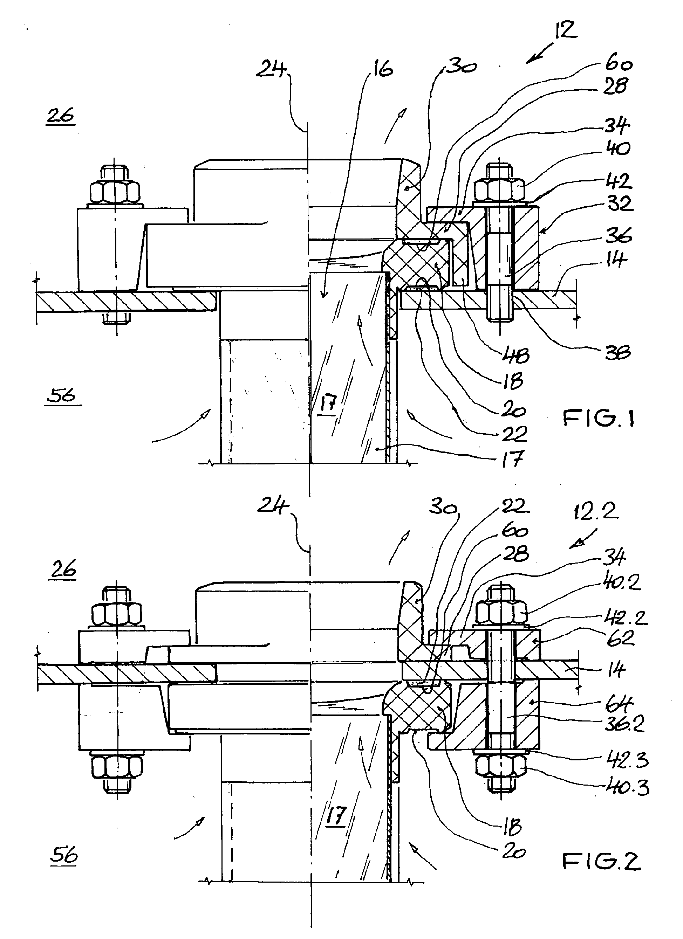

In Fig. 1 ist ein Filterelement 12 mit seinem oberen Ende dargestellt. Mehrere solcher Filterelemente 12 können in einer Filtergehäuseplatte 14 eines Filtergehäuses angebracht sein.

Das Filterelement 12, das im vorstehenden Beispielsfall als im Querschnitt etwa rechteckförmige Filterplatte ausgebildet ist, besitzt einen um seine Filteröffnung 16 umlaufenden Kopfflansch 18, in dem sein Filtermedium 17 gasdichtförmig befestigt, insbesondere eingegossen vorhanden ist. Der Kopfflansch 18 ist im Querschnitt etwa rechteckförmig. Er liegt mit seiner Unterseite, in der eine flächige Vertiefung 20 vorhanden ist, auf der Oberseite der Filtergehäuseplatte 14 an. Die gasdichte Anlage wird über ein in der Vertiefung 20 einsitzendes streifenförmiges Dichtelement 22 sichergestellt. Dazu wird der Kopfflansch 18 von - in Fig. 1 - oben in Richtung der Filterachse 24 gegen die Filtergehäuseplatte 14 gepresst, wie noch nachstehend näher beschrieben wird.

Auf der Oberseite eines auf der Reingasseite 26 angeordneten Kopfflansches 18 liegt ein Pressschenkel 28 (Fig. 1). Der Pressschenkel 28 bildet eine im vorliegenden Fall rechtwinklige Abbiegung eines in Richtung der Filterachse 24 ausgerichteten, um die Filteröffnung 16 herumlaufenden Filterkopfes 30. Der Filterkopf 30 und der Pressschenkels 28 sind einteilig miteinander in Form eines rechtwinkligen Schenkels verbunden. Auf dem Pressschenkel 28 drückt von oben eine von einem Presskopf 32 auskragend angeformte Pressplatte 34. Durch den Presskopf 32 ragt ein Gewindestab 36 in zur Filterachse 24 paralleler Richtung hindurch. Das untere Ende des Gewindestabes 36 ist in einer ein Innengewinde aufweisenden Bohrung 38 eingeschraubt, die in der Filtergehäuseplatte 14 vorhanden ist. Der Gewindestab 36 könnte auch an der Filtergehäuseplatte 14 festgeschweißt sein. Auf dem oberen Ende des Gewindestabes 36 ist eine Mutter 40 aufgeschraubt. Die Mutter 40 drückt über eine Unterlegscheibe 42 von oben pressend auf den Presskopf 32. Auf diese Weise kann der Pressschenkel 28 und damit der Filterkopf 30 in axialer Richtung von oben auf den Kopfflansch 18 gepresst und dadurch der Kopfflansch 18 an der Filtergehäuseplatte 14 befestigt werden. Nach Lösen der Verschraubung kann die Pressplatte 34 des Presskopfes 32 von dem Pressschenkel 28 weggenommen und der Filterkopf 30 von dem Filterelement 12 entfernt werden. Anschließend kann dann das Filterelement 12 von der Filtergehäuseplatte 14 entfernt und durch ein neues Filterelement 12 ersetzt werden. Nach Einsetzen eines neuen Filterelementes 12 kann derselbe Filterkopf 30 wieder in seine in Fig. 1 dargestellte Lage auf den nunmehr neuen Kopfflansch 18 von oben angelegt und mittels des Presskopfes 32 pressend an den Kopfflansch 18 angesetzt werden.

Im vorliegenden Beispielsfall ist an dem Pressschenkel 28 noch ein in Richtung der Filterachse 24 rechtwinklig umgebogener Seitenschenkel 48 vorhanden, der einteilig mit dem Pressschenkel 28 und damit auch mit dem Filterkopf 30 verbunden ist. Dieser Seitenschenkel 48 rahmt den Kopfflansch 18 mit geringem Abstand von der Seite her ein.

Bei dem in Fig. 2 dargestellten Filterelement 12 ist dessen Kopfflansch 18 im Gegensatz zu Fig. 1 auf der Rohgasseite 56 angeordnet. Der Kopfflansch 18 liegt damit - bezogen auf Fig. 2 - von unten an der Filtergehäuseplatte 14 gasdicht an. Die Gasdichtigkeit wird über ein Dichtelement 22 bewirkt, das an der unteren Filtergehäuseplatte 14 anliegt und in der auf der Oberseite des Kopfflansches 18 vorhandenen Vertiefung 60 einsitzt. In dem Kopfflansch 18 ist also eine untere Vertiefung 20 und eine obere Vertiefung 60 vorhanden, die eine jeweils gleiche Form aufweisen. Dadurch kann ein gleiches Dichtelement 22 auf der Unterseite oder auf der Oberseite des Kopfflansches 18 angeordnet werden, wie die Fig. 1 und 2 verdeutlichen.

Auf der Oberseite der Filtergehäuseplatte 14 sitzt ein Filterkopf 30 mit rechtwinklig angeformtem Pressschenkel 28 auf. Bei diesem Filterelement 12.2 besitzt der Pressschenkel 28 keinen Seitenschenkel 48. Auf einen solcher Seitenschenkel 48 könnte auch bei dem Filterelement 12 (Fig. 1) verzichtet werden.

Auf dem Pressschenkel 28 liegt wiederum eine Pressplatte 34 von oben in axialer Richtung (Filterachse 24) an. Diese Pressplatte 34 ist Teil eines oberen Presskopfes 62, der von oben an der Filtergehäuseplatte 14 anliegt. Von unten liegt an dieser Filtergehäuseplatte 14 ein unterer Presskopf 64 an. Beide Pressköpfe 32, 64 werden durch einen gemeinsam durch sie hindurch ragenden Gewindestab 36.2 aufeinander gepresst, so dass sie die Filtergehäuseplatte 14 zwischen sich einpressen. Zu diesem Zweck sind auf beide Enden des Gewindestabes 36.2 jeweils eine Mutter 40.2. 40.3 über eine zwischengelegte Unterlegscheibe 42.2, 42.3 aufgeschraubt.

Auch bei der rohgasseitigen Befestigung des Filterelementes 12.2 kann das Filterelement 12 mit seinem Kopfflansch 18 entsorgt werden, ohne dass dazu auch der Filterkopf 30 mit entsorgt werden müsste.

Zur optimalen Luftführung beim Reinigen des Filterelementes 12 braucht lediglich der Filterkopf 30 umlaufend um die Filteröffnung 16 vorhanden zu sein. Die übrigen zum Anpressen des Kopfflansches 18 verwendeten Bauteile, wie der am Filterkopf 30 angeformte Pressschenkel 28 oder die Pressplatte 34 und der an ihm befestigte Presskopf 32 beziehungsweise der obere Presskopf 62 und der untere Presskopf 64 bei dem Filterelement 12.2, können lediglich abschnittsweise vorhanden sein.

Bei der Darstellung gemäß Fig. 1 entspricht der sich aus dem Kopfflansch 18, dem Filterkopf 30, dem Pressschenkel 28 und dem Seitenschenkel 48 ergebende Gesamtquerschnitt dem im Stand der Technik bekannten Filterkopf.

Zur exakten Ausrichtung des Filterelements 12 zum Filterkopf 30 können zwischen diesen beiden Teilen Abstandshalter oder vergleichbare Ausrichtteile vorgesehen werden. Bei dem Filterelement 12.2 könnten solche Abstandshalter beziehungsweise Ausrichtteile zu dem oberen und unteren Presskopf 62, 64 hin angeordnet sein.

## Patentansprüche

1. Filterelement (12, 12.2) das lösbar in einem Filtergehäuse befestigbar ist,
- mit einem Kopfflansch (18), der mittels Befestigungselementen (32, 34, 62, 64) an einer Filtergehäuseplatte (14) des Filtergehäuses lösbar lagefixierbar ist,
- **dadurch gekennzeichnet, dass**
- der Filterkopf (30) - direkt oder indirekt - an einem Kopfflansch (18) lösbar befestigbar ist,
- das Filtermedium (17) des Filterelements (12, 12.2) gasdicht in dem Kopfflansch (18) befestigt ist.

2. Filterelement nach Anspruch 1,
- **dadurch gekennzeichnet, dass**
- der Filterkopf (30) einen fest angeformten Schenkel (28) besitzt, der in axialer Richtung pressend an dem Kopfflansch (18) anlegbar ist,
- der Schenkel (28) durchgehend oder abschnittsweise umlaufend am Filterkopf (30) vorhanden ist.

3. Filterelement nach Anspruch 2,
- **dadurch gekennzeichnet, dass**
- das freie Ende des am Filterkopf (30) fest angeformten Schenkels (28) derart abgewinkelt ist, dass der Schenkel als ein Seitenschenkel (48) auch seitlich des Kopfflansches (18) zumindest bereichsweise vorhanden ist.

4. Filterelement nach einem der vorstehenden Ansprüche,
- **dadurch gekennzeichnet, dass**
- der Filterkopf (30) ein Kunststoff-Spritzteil ist.

5. Filterelement nach einem der vorstehenden Ansprüche,
- **dadurch gekennzeichnet, dass**
- der Filterkopf (30) mit seinem fest angeformten Schenkel (28, 48) ein einteiliges Kunststoff-Spritzteil ist.

6. Filterelement nach einem der vorstehenden Ansprüche,
- **dadurch gekennzeichnet, dass**
- der vom Kopfflansch (18) umschlossene Innenraum bei einer Filterplatte im Querschnitt etwa rechteckförmig und bei einer Filterpatrone etwa kreisförmig ist.

7. Filterelement nach einem der vorstehenden Ansprüche,
- **dadurch gekennzeichnet, dass**
- ein Dichtelement (22) zwischen dem Kopfflansch (18) und der Filtergehäuseplatte (14) vorhanden ist.

8. Filterelement nach Anspruch 7,
- **dadurch gekennzeichnet, dass**
- im Kopfflansch eine Vertiefung (20, 60) für ein Dichtelement (22) vorhanden ist.

9. Filterelement nach Anspruch 8,
- **dadurch gekennzeichnet, dass**
- auf in axialer Richtung beiden Seiten des Kopfflansches (18) eine Vertiefung (20, 60) für ein Dichtelement (22) vorhanden ist, so dass
- bei einer reingasseitigen Befestigung des Kopfflansches (18) ein Dichtelement (22) in eine an der zum Filterkopf (30) entgegengesetzten Unterseite des Kopfflansches vorhandene Vertiefung (20) einsetzbar ist und
- bei einer rohgasseitigen Befestigung des Kopfflansches (18) ein Dichtelement in eine an der zum Filterkopf hin gerichteten Oberseite des Kopfflansches vorhandenen Vertiefung (60) einsetzbar ist.

10. Filterelement nach Anspruch 1,
- **dadurch gekennzeichnet, dass**
- die Befestigungselemente mehrere Pressköpfe (32, 62, 64) aufweisen, mittels denen der Filterkopf (30) oder der am Filterkopf fest angeformte Schenkel (28) sowie der Kopfflansch (18) lösbar gasdicht an dem Filtergehäuse wie insbesondere an der Filtergehäuseplatte (14) des Filtergehäuses haltbar ist.

11. Filterelement nach Anspruch 10,
- **dadurch gekennzeichnet, dass**
- mittels Pressköpfen (32) der Kopfflansch (18) zwischen dem Filterkopf (30) oder dem am Filterkopf fest angeformten Schenkel (28) und der Filtergehäuseplatte (14) einklemmbar haltbar ist.

12. Filterelement nach Anspruch 10,
- **dadurch gekennzeichnet, dass**
- mittels der Pressköpfe (62, 64) der Filterkopf (30) oder der am Filterkopf fest angeformte Schenkel (28) von der einen Seite her an der Oberseite der Filtergehäuseplatte (14) und der Kopfflansch (18) von der dazu gegenüberliegenden anderen Seite her an der Unterseite der Filtergehäuseplatte (14) jeweils pressend anlegbar ist.
